# EUROPEAN PATENT APPLICATION

(11) **EP 4 763 606 A2**
(43) Date of publication of application: **24.06.2026**
(21) Application number: 26175935.1
(22) Date of filing: 14.12.2018
(51) Int. Cl.: B60N 2/427

(54) **CUSHIONING STRUCTURE AND CHILD SAFETY SEAT THEREWITH**

(30) Priority: 14.12.2017 CN 201711341813
(62) Divisional of application: 22208741.3
(71) Applicant: BP Children's Products HK Co., Limited, Wanchai (HK)
(72) Inventor: LI, Ruyi, Dongguan, Guangdong, 523000 (CN)
(74) Representative: Pfenning, Meinig & Partner mbB

(57) **Abstract**

The present application discloses a cushioning structure which is disposed to a child safety seat that includes a first component (121, 111) and a second component (123, 112, 116) sliding relative to each other. The cushioning structure includes a resilient first cushioning member (21, 6, 7, 8, 9) positioned at the first component (121, 111), and when the second component (123, 112, 116) slides relative thereto, the first cushioning member (21, 6, 7, 8, 9) provides a cushion for the second component (123, 112, 116). The cushioning structure can be disposed in an ISOFIX (12) or a supporting leg (11) of the child safety seat. During a crash accident, the first component (121, 111) and the second component (123, 112, 116) are biased to slide relative to each other, and the first cushioning member (21, 6, 7, 8, 9) can cushion the sliding to prevent a large instant acceleration from arising, which reduces harm to the child. The present application further discloses a child safety seat with the cushioning structure.

## Description

### Field of the Invention

The present invention relates to a cushioning structure and a child safety seat.

### Background of the Invention

Nowadays, a child safety seat is a necessary protective device that provides safety and protection for a child or an infant child in a car ride. A conventional child safety seat includes a main body and a base. The base can be fixed to a car seat via an ISOFIX (International Standards Organization FIX) system, and the main body is detachably installed to the base. The conventional main body includes a seat portion for the child to be seated on and a backrest portion for the child to recline on. Besides, the conventional ISOFIX system includes ISOFIX ports disposed on the car seat and ISOFIX fastening mechanisms disposed on the base. The ISOFIX fastening mechanism includes an ISOFIX plug. Through inserting the ISOFIX plug into the corresponding ISOFIX port, the base can be efficiently and stably installed to the car seat.

When a car crash accident happened, the ISOFIX system ensures that the child safety seat does not disengage and fall from the car seat. However, due to restraint with the ISOFIX system, a large instant acceleration of the child safety seat often arises during the crash, and the acceleration may lead to an impact that do harm to the child.

Therefore, in order to reduce the harm to the child during the car crash accident, it is important to provide a cushioning structure with a capacity to achieve a buffering effect for the child safety seat.

### Summary of the Invention

This in mind, the present invention aims at providing a cushioning structure with a capacity to achieve a buffering effect for the child safety seat.

The present application further aims at providing a child safety seat with the cushioning structure.

This is achieved by a cushioning structure and a child safety seat according to claims 1 and 8. The dependent claims pertain to corresponding further developments and improvements.

As will be seen more clearly from the detailed description following below, the claimed cushioning structure is disposed to a child safety seat. The child safety seat includes a first component and a second component configured to slide relative to each other. The cushioning structure includes a first cushioning member positioned at the first component. The first cushioning member is resilient. When the second component slides relative to the first component, the first cushioning member provides a cushion for the second component.

Preferably, the first cushioning member is fixed to the first component. A first cushioning slot is formed on the first cushioning member. The cushioning structure further includes a fastening member fixed to the second component. When the second component slides relative to the first component, the fastening member is squeezed into the first cushioning slot.

Preferably, the first cushioning member is made of resilient high-density material, and the fastening member is a rigid member shaped and made of rigid material.

Preferably, the fastening member comprises a cushioning head disposed at a free end of the fastening member, and a diameter of the cushioning head is larger than a diameter of the first cushioning slot.

Preferably, the cushioning head is in a shape of a mushroom, a ball, or a tapered body.

Preferably, the fastening member further includes a column body with a length longer than a length of the first cushioning member, and the cushioning head is disposed at an end of the column body.

Furthermore, the cushioning structure includes at least one second cushioning member disposed at the first component. The at least one second cushioning member and the first cushioning member are arranged longitudinally along the first component. A second cushioning slot is formed on the at least one second cushioning member and communicated with the first cushioning slot.

Preferably, the at least one second cushioning member is made of material with a density greater than a density of the first cushioning member. When there are at least two of the second cushioning members, a density of one of the at least two of second cushioning members farther away from the first cushioning member is larger than a density of another of the at least two of second cushioning members closer to the first cushioning member.

Preferably, a diameter of the second cushioning slot is smaller than a diameter of the first cushioning slot. When there are at least two of the second cushioning members, the diameter of the second cushioning slot on one of the at least two of second cushioning members farther away from the first cushioning member is smaller than the diameter of another of the at least two of second cushioning slots on the second cushioning member closer to the first cushioning member.

Preferably, the length of the column body is longer than a sum of a length of the first cushioning member and a length of the second cushioning member.

Preferably, the child safety seat further includes a seat body and at least one ISOFIX mechanism connected with a rear end of the seat body and including an ISOFIX plug, the first component and the second component. The first component is a first tube component, and the second component is a second tube component. The first component and the second component are sheathed with each other. The first component is fixed to the ISOFIX plug, and the second component is fixed to the seat body.

Preferably, the first component is sheathed in the second component. The first cushioning member is fixed to a front end of the first component and positioned inside the first component. Furthermore, the child safety seat includes a connecting rod fixed to and penetrating through the second component and slidably coupled with the first component. The connecting rod is positioned on a rear side of the first cushioning member, and the fastening member is fixed to the connecting rod.

Preferably, the fastening member further includes a restraining portion. The cushioning head is disposed at an end of the fastening member. The restraining portion is integrated with another end of the fastening member, and the restraining portion is positioned inside the first component and fixed to the connecting rod.

Preferably, an accommodating hole is further formed on the first cushioning member and connected to a rear end of the first cushioning slot. The fastening member is positioned in the accommodating hole. A diameter of the fastening member is larger than a width of the first cushioning slot, and the fastening member is squeezed from the accommodating hole into the first cushioning slot when the second component slides relative to the first component.

Preferably, the width of the first cushioning slot gradually decreases from the rear end of the first cushioning slot to a front end of the first cushioning slot.

Preferably, at least one deformation slot is further formed on the first cushioning member and adjacent to the first cushioning slot.

Preferably, a width of the deformation slot gradually decreases from a rear end of the deformation slot to a front end of the deformation slot.

Preferably, at least two deformation slots are formed on the first cushioning member and disposed on two sides of the first cushioning slot.

Preferably, the child safety seat further comprises a seat body and at least one ISOFIX mechanism connected with a rear end of the seat body (10) and including an ISOFIX plug. The first component and the second component are sheathed with each other. The first component is a first tube component. The second component is a second tube component. The first component is fixed to the ISOFIX plug, and the second component is fixed to the seat body.

Preferably, the first component is sheathed in the second component. the first cushioning member is fixed to a front end of the first component and positioned inside the first component. The fastening member is a connecting rod penetrating into the first component, and the connecting rod is slidably coupled with the first component.

Preferably, the first cushioning member is a compressible spring compressed by sliding movement of the second component relative to the first component.

Preferably, the child safety seat further includes a seat body and at least one ISOFIX mechanism connected with a rear end of the seat body and including an ISOFIX plug, a first component and a second component. The first component is a first tube component, and the second component is a second tube component. The first component and the second component are sheathed with each other. The first component is fixed to the ISOFIX plug, and the second component is fixed to the seat body.

Preferably, the first component is sheathed in the second component. A restraining member is fixed to a front end of the first component. A connecting rod is fixed to and penetrates through the second component and slidably coupled with the first component, and the compressible spring resiliently abuts against the restraining member and the connecting rod.

Preferably, at least two first cushioning members are disposed in the first component, and at least two fastening members corresponding to the at least two first cushioning members are disposed in the second component.

Preferably, at least two first cushioning slots are side by side formed on the first cushioning member, and at least two fastening members corresponding to the at least two first cushioning slots are disposed in the second component.

Preferably, the child safety seat further includes a supporting leg, and the supporting leg includes the first component and the second component. The first component is a supporting rod, and the second component is a foot member. The foot member is up and down slidably connected to a bottom portion of the supporting rod. The first cushioning member is positioned above the fastening member. A lower end of the fastening member is fixed to the foot member, and a cushioning head is disposed at an upper end of the fastening member.

Preferably, the child safety seat further includes a supporting leg, and the supporting leg includes the first component and the second component. The first component is a supporting rod, and the second component is a foot member. The foot member is up and down slidably connected to a bottom portion of the supporting rod, and the compressible spring resiliently abuts between the supporting rod and the foot member.

Preferably, a restraining groove accommodating the compressible spring is formed at one of the supporting rod and the foot member, and a guiding post sheathed by the compressible spring is disposed on the other of the supporting rod and the foot member.

Preferably, two ISOFIX mechanisms are disposed on two rear sides of the seat body, and the connecting rod is connected between the second components of the two ISOFIX mechanisms.

The claimed child safety seat includes the cushioning structure.

In contrast to the conventional child safety seat, the child safety seat of the present application provides the cushioning structure disposed in the ISOFIX mechanism or the supporting leg. During a crash accident, the first cushioning member and the second cushioning member of the cushioning structure disposed between the first tube component and the second tube component or between the supporting rod and the foot member can provide a cushion to prevent a large instant acceleration of the seat body, which reduces any possibility of harm to the child in the seat due to the crash accident.

These and other objectives of the present invention will no doubt become obvious to those of ordinary skill in the art after reading the following detailed description of the preferred embodiment that is illustrated in the various figures and drawings.

### Brief Description of the Drawings

In the following, the invention is further illustrated by way of example, taking reference to the accompanying drawings. Thereof
FIG. 1 is a diagram of a base of a child safety seat with at least one folded ISOFIX plug and an expanded supporting leg according to an embodiment of the present application,
FIG. 2 is a diagram of the base of the child safety seat with the at least one expanded ISOFIX plug and the folded supporting leg according to the embodiment of the present application,
FIG. 3 is a schematic diagram illustrating installation of an ISOFIX mechanism on a seat body of the base according to the embodiment of the present application,
FIG. 4 is a diagram of the ISOFIX mechanism according to a first embodiment of the present application,
FIG. 5 is an exploded diagram of the ISOFIX mechanism according to the first embodiment of the present application,
FIG. 6 is an enlarged sectional diagram of the ISOFIX mechanism according to the first embodiment of the present application,
FIG. 7 is an enlarged sectional diagram of the ISOFIX mechanism according to a second embodiment of the present application,
FIG. 8 is an exploded diagram of the ISOFIX mechanism according to a third embodiment of the present application,
FIG. 9 is a side view of a first cushioning member according to the third embodiment of the present application,
FIG. 10 is an enlarged sectional diagram of the ISOFIX mechanism according to the third embodiment of the present application,
Fig. 11 is an exploded diagram of the ISOFIX mechanism according to a fourth embodiment of the present application,
FIG. 12 is diagram illustrating a first cushioning member installed inside a first tube component according to the fourth embodiment of the present application,
FIG. 13 is an enlarged sectional diagram of the ISOFIX mechanism according to the fourth embodiment of the present application,
FIG. 14 is a diagram of a supporting leg according to a fifth embodiment of the present application,
FIG. 15 is a diagram of a foot member according to the fifth embodiment of the present application,
FIG. 16 is an enlarged sectional diagram of the foot member according to the fifth embodiment of the present application, and
FIG. 17 is an enlarged sectional diagram of a foot member according to a sixth embodiment of the present application.

### Detailed Description

In order to illustrate technical specifications and structural features as well as achieved purposes and effects of the present invention, relevant embodiments and figures are described as follows.

In the following detailed description of the preferred embodiments, reference is made to the accompanying drawings which form a part hereof, and in which is shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. Accordingly, the drawings and descriptions will be regarded as illustrative in nature and not as restrictive.

When a car crash accident happens, a large instant acceleration generated on a child safety seat may do harm to a child seated in the child safety seat. To solve the aforementioned problem, the present application provides a cushioning structure and a child safety seat therewith. A first component and a second component configured to slide relative to each other are disposed in the child safety seat, and the cushioning structure which provides a cushion for the relative motion between the first component and the second component is disposed between the first component and the second component. Therefore, the abovementioned large instant acceleration can be prevented.

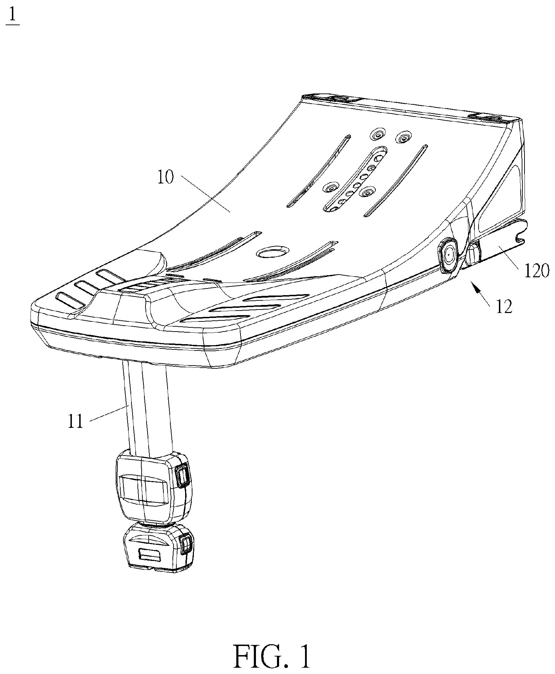

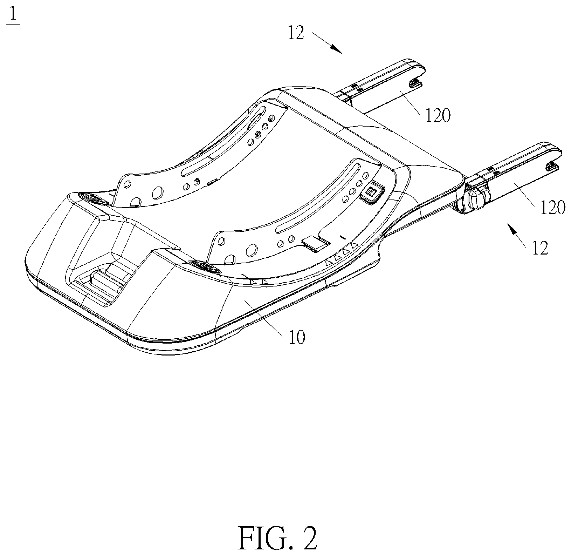

Please refer to FIG. 1 and FIG. 2. FIG. 1 is a diagram of a base 1 of a child safety seat with at least one folded ISOFIX plug 120 and an expanded supporting leg 11 according to an embodiment of the present application. FIG. 2 is a diagram of the base 1 of the child safety seat with the at least one expanded ISOFIX plug 120 and the folded supporting leg 11 according to the embodiment of the present application. As shown in FIG. 1 and FIG. 2, the base 1 of the child safety seat includes a seat body 10, the supporting leg 11, and an ISOFIX (International Standards Organization FIX) mechanism 12. The supporting leg 11 is disposed at a front end of the seat body 10, and the ISOFIX mechanism 12 is disposed at a rear end of the seat body 10. The ISOFIX mechanism 12 includes the ISOFIX plug 120 configured to be inserted into an ISOFIX port on a car seat so that the base 1 can be fixed on the car seat and the supporting leg 11 can stand on a floor inside the car. Besides, after the base 1 is detached from the car seat, the ISOFIX plug 120 and the supporting leg 11 can be folded and settled under the seat body 10. Cushioning structures of the present application can be disposed in the ISOFIX mechanism 12 and the supporting leg 11, but not limited to this. That is, the cushioning structure can be disposed at other locations of the child safety seat.

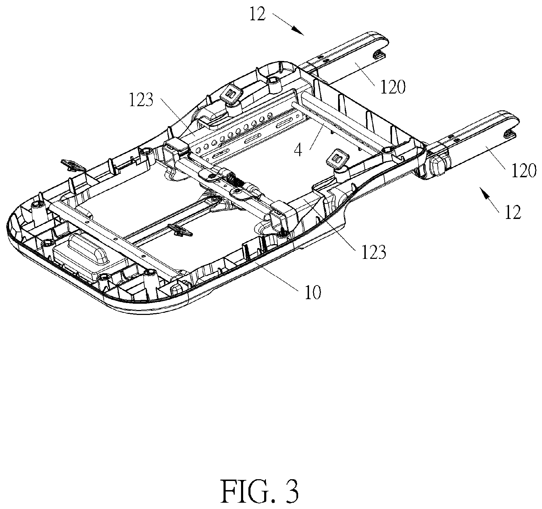

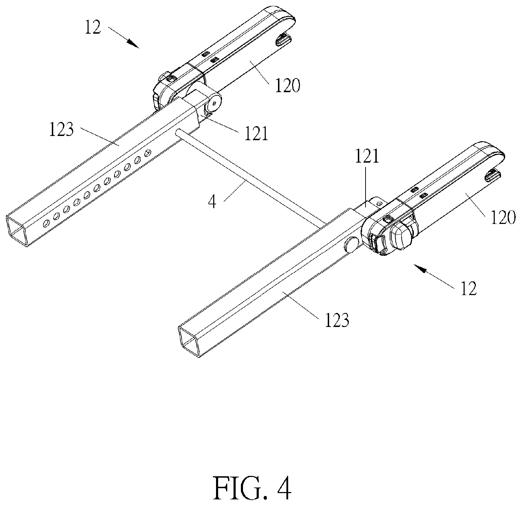

Please refer to FIG. 3 and FIG. 4. FIG. 3 is a schematic diagram illustrating installation of the ISOFIX mechanism 12 on the seat body 10 of the base 1 according to the embodiment of the present application. FIG. 4 is a diagram of the ISOFIX mechanism 12 according to a first embodiment of the present application, According to the first embodiment of the present application, the cushioning structure is disposed in the ISOFIX mechanism 12. The ISOFIX mechanism 12 includes a first tube component 121 and a second tube component 123 sheathed with each other and configured to slide relative to each other. The first tube component 121 is the abovementioned first component and is fixed to the ISOFIX plug 120. The second tube component 123 is the abovementioned second component and is fixed to the seat body 10. The seat body 10 and the second tube component 123 can back and forth slide relative to the first tube component 121. A locking mechanism can be disposed between the first tube component 121 and the second tube component 123 so as to lock the relative positions of the first tube component 121 and the second tube component 123. According to the first embodiment, the first tube component 121 is a sheathed inner tube, and the second tube component 123 is a sheathing outer tube that sheathes the first tube component 121.

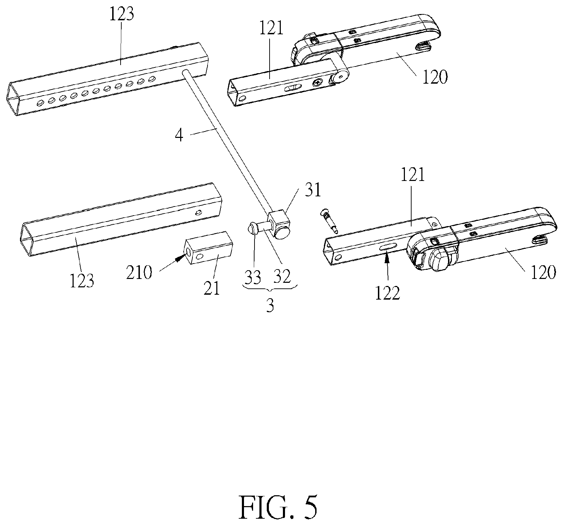

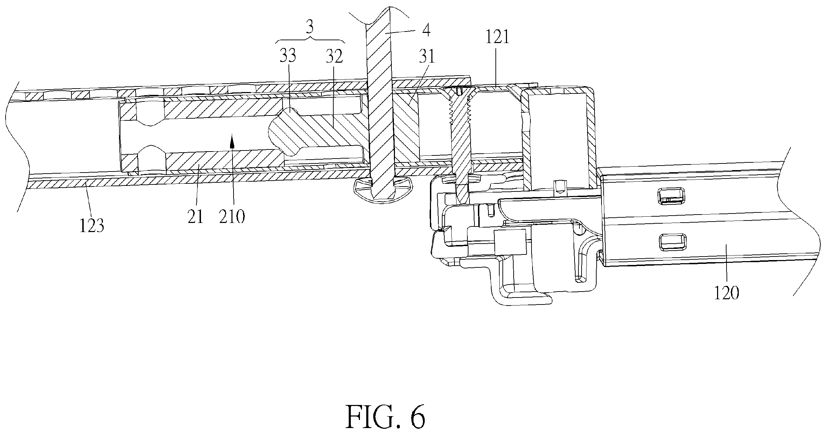

Please refer to FIG. 5 and FIG. 6. FIG. 5 is an exploded diagram of the ISOFIX mechanism 12 according to the first embodiment of the present application. FIG. 6 is an enlarged sectional diagram of the ISOFIX mechanism 12 according to the first embodiment of the present application. The cushioning structure includes a resilient first cushioning member 21 positioned in the first tube component 121. When the second tube component 123 slides forward in a positive sliding direction relative to the first tube component 121, the first cushioning member 21 provides a cushion for the second tube component 123, which reduces an instant acceleration of the seat body 10 relative to the car seat during a crash. According to a preferred embodiment, the cushioning structure further includes a fastening member 3 fixed to the second tube component 123. The fastening member 3 is accommodated in the first tube component 121 and can slide with the second tube component 123 along the first tube component 121. When the second tube component 123 slides forward relative to the first tube component 121, the first cushioning member 21 provides the cushion for the second tube member 123 by the fastening member 3 cushioning an impact.

Please refer to FIG. 5 and FIG. 6. The first cushioning member 21 is inserted into the first tube component 121 and fixed at a front end of the first tube component 121. The first cushioning member 21 is a cuboid, and a first cushioning slot 210 is formed on and penetrates through the first cushioning member 21 along a longitudinal direction of the first cushioning member 21. Besides, elongated slots 122 are formed on the first tube component 121 along a longitudinal direction of the first tube component 121. The fastening member 3 is positioned on a rear side of the first cushioning member 21 and includes a column body 32 and a cushioning head 33 disposed at a free front end of the column body 32. A length of the column body 32 is longer than a length of the first cushioning member 21, and a diameter of the cushioning head 33 is larger than a diameter of the first cushioning slot 210. A connecting rod 4 is fixed to and penetrates through the second tube component 123. Further, the connecting rod 4 is positioned on the rear side of the first cushioning member 21 and penetrates into the elongated slots 122 on the first tube component 121 so as to slidably couple with the first tube component 121. The second tube component 123 and the connecting rod 4 can slide together relative to the first tube component 121, and a travel distance of the sliding movement is limited by a length of the elongated slot 122. Besides, the fastening member 3 is fixed to the second tube component 123 via the connecting rod 4 and a restraining portion 31. That is, a rear end of the column body 32 is fixed to the restraining portion 31 by integration with the restraining portion 31, and the restraining portion 31 is fixed to the connecting rod 4 by sheathing the connecting rod 4. Therefore, the fastening member 3 is fixed to the second tube component 123. As mentioned above, the restraining portion 31 can be integrated with the fastening member 3. It should be noticed that the first cushioning member 21 can be made of, but is not limited to, resilient high-density material that provides enough restoring resilience arising from deformation of the first cushioning member 21, and the fastening member 3 can be, but is not limited to, a rigid member and is made of rigid material such as stainless steel, iron, aluminum alloy, etc. When the second tube component 123 slides forward relative to the first tube component 121 and drives the fastening member 3 to slide forward together via the connecting rod 4, the cushioning head 33 at the free front end of the column body 32 of the fastening member 3 abuts against the first cushioning member 21 to deform the first cushioning member 21 and further gradually squeeze into the first cushioning slot 210. When the cushioning head 33 squeezes into the first cushioning member 21, the deformed first cushioning member 21 provides the countering restoring resilience generating a buffering effect to cushion the forward motion of the fastening member 3, which therefore cushions the impact of the second tube component 123. When the second tube component 123 slides backward in a reverse direction relative to the first tube component 121, the cushioning head 33 is biased to disengage from the first cushioning slot 210. According to the embodiment, the cushioning head 33 is in a shape of a mushroom, but not limited to this. According to other embodiments, the cushioning head 33 can be in a shape of a ball, a tapered body, or any structure that has an arc surface or an oblique surface at a front end of the structure so as to guide the cushioning head to squeeze into the first cushioning slot 210 smoothly.

It should be noticed that the numbers of the first cushioning member 21, the first cushioning slot 210, and the fastening member 3 are not limited by the embodiment. According to other embodiments, two or more first cushioning members 21 can be side by side disposed in the second tube component 123, and two or more fastening members 3 respectively corresponding to the two or more first cushioning members 21 are fixed to the second tube component 123 or to the connecting rod 4 via the restraining portions 31. Therefore, two or more cushioning heads 33 can respectively and simultaneously squeeze into the corresponding first cushioning slots 210, which achieves a better buffering effect. Besides, according to other embodiments, two or more first cushioning slots 210 can be side by side formed on the first cushioning member 21, and two or more fasteni9ng members corresponding to the two or more first cushioning slots 210 are disposed on the second tube component 123 or the connecting rod 4, but not limited to this.

Please refer to FIG. 2 and FIG. 4. According to the embodiment, two ISOFIX mechanisms 12 are respectively disposed on two rear sides of the base 1, and the first cushioning member 21 and the fastening member 3 can be disposed in each of the two ISOFIX mechanisms 12 so that the two ISOFIX mechanisms 12 are symmetrical to each other to achieve a better buffering effect, but not limited to this. According to other embodiments, only one of the two ISOFIX mechanisms 12 is configured with the first cushioning member 21 and the fastening member 3. In addition, the connecting rod 4 is connected between the two second tube components 123 of the two ISOFIX mechanisms 12 so that the two second tube components 123 and the two fastening components can be driven to slide together and simultaneously.

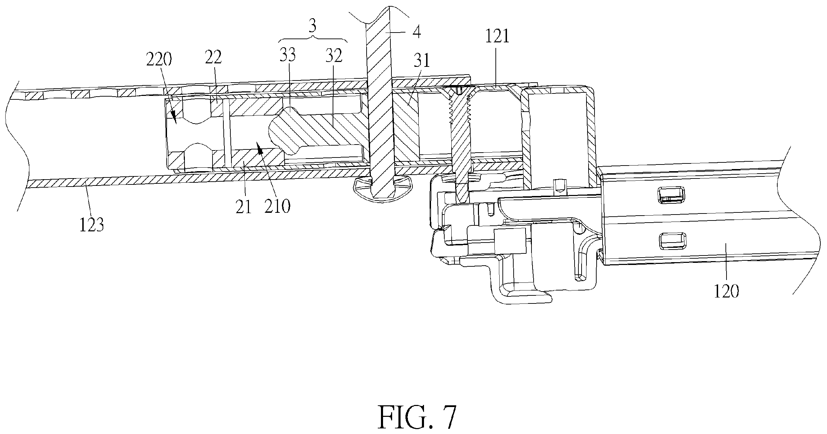

Please refer to FIG. 7. FIG. 7 is an enlarged sectional diagram of the ISOFIX mechanism 12 according to a second embodiment of the present application. This second embodiment and the previous first embodiment adopt the same fastening member 3 and the same structural configuration for disposing the fastening member 3. The difference between the second embodiment and the previous first embodiment is that, besides the first cushioning member 21, a second cushioning member 22 is further fixed to the first tube component 121. The second cushioning member 22 is connected to a front end of the first cushioning member 21. A second cushioning slot 220 is formed on and penetrates through the second cushioning member 22 along a longitudinal direction of the second cushioning member 22. The length of the column body 32 is longer than a sum of a length of the first cushioning member 21 and a length of the second cushioning member 22. The second cushioning member 22 can be made of material with a density greater than a density of the first cushioning member 21, and a diameter of the second cushioning slot 220 is smaller than a diameter of the first cushioning slot 210. Indicate φA, φB and φC respectively as the diameters of the cushioning head 33, the first cushioning slots 210 and the second cushioning slot 220, and it can be concluded that φA>φB>φC. By disposing at least two cushioning members, that is, the first cushioning member 21 and the second cushioning member 22 in the first tube component 121, wherein the second cushioning member 22 bears a better buffering capacity than the first cushioning member 21 according to design, a safety concern about loss of buffering effect due to yielding of the first cushioning member 21 under overpowering impact from a severe crash can be reduced or even prevented. According to another embodiment, the at least two second cushioning members 22 and the first cushioning member 21 can be arranged longitudinally along the first tube component 121. As for these at least two second cushioning members 22, a density of the second cushioning member 22 farther away from the first cushioning member 21 is larger than a density of the second cushioning member 22 closer to the first cushioning member 21, and the diameter of the second cushioning slot 220 on the second cushioning member 22 farther away from the first cushioning member 21 is smaller than the diameter of the second cushioning slot 220 on the second cushioning member 22 closer to the first cushioning member 21. It should be noticed that the second cushioning slot 220 can be communicated with the first cushioning slot 210, but not limited to this.

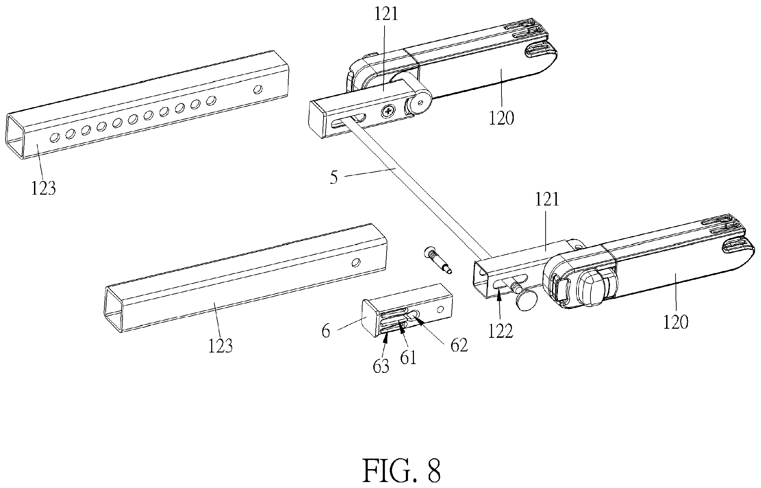

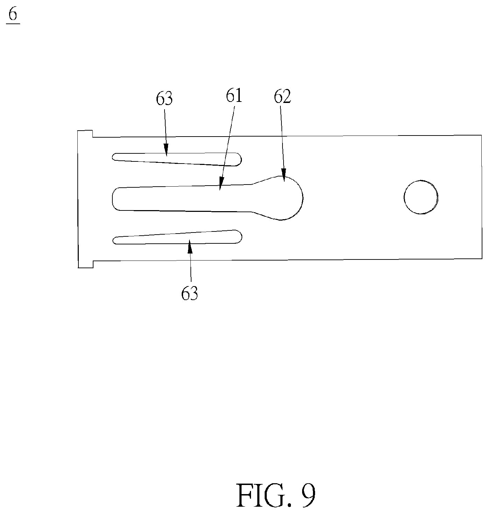

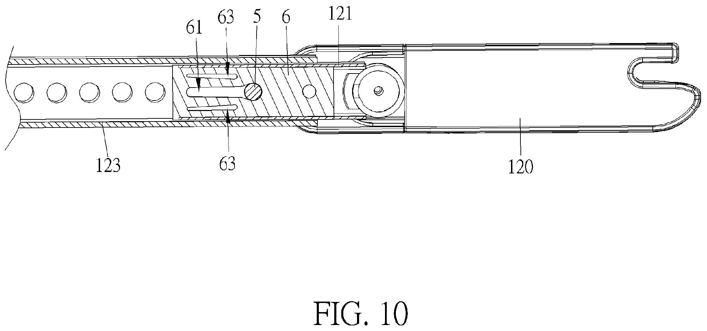

Please refer to FIG. 8 to FIG. 10. FIG. 8 is an exploded diagram of the ISOFIX mechanism 12 according to a third embodiment of the present application. FIG. 9 is a side view of a first cushioning member 6 according to the third embodiment of the present application. FIG. 10 is an enlarged sectional diagram of the ISOFIX mechanism 12 according to the third embodiment of the present application. This third embodiment and the previous second and first embodiments include the same ISOFIX mechanism 12 with the same ISOFIX plug 120, the same first tube component 121 and the same second tube component 123. The difference between the third embodiment and the previous embodiments is that the third embodiment adopts a different fastening member 5 fixed to the second tube component 123 and a different resilient first cushioning member 6. The first cushioning member 6 is inserted into and fixed to the front end of the first tube component 121, and a first cushioning slot 61 is formed on the first cushioning member 6, wherein the first cushioning slot 61 extends along the longitudinal direction of the first cushioning member 6 and left to right transversely penetrates through the first cushioning member 6 instead of back to forth longitudinally penetrating through the first cushioning member 6. In addition, an accommodating hole 62 is further formed on the first cushioning member 6 and left to right transversely penetrates through the first cushioning member 6. The accommodating hole 62 is positioned at a rear end of the first cushioning slot 61 and connected and communicated with the first cushioning slot 61.A diameter of the accommodating hole 62 is larger than a width of the first cushioning slot 61. According to the embodiment, the fastening member 5 is a connecting rod that penetrates into the second tube component 123 and the first tube component 121, that is, the fastening member 5 penetrates through the elongated slot 122 configured on the first tube component 121, which enables the fastening member 5 and the second tube component 123 to slide together and simultaneously relative to the first tube component 121. The fastening member 5 penetrates through and is accommodated in the accommodating hole 62, and a diameter of the fastening member 5 is larger than the width of the first cushioning slot 61. When the second tube component 123 slides forward relative to the first tube component 121, the fastening member 5 moves from the accommodating hole 62 to squeeze into the first cushioning slot 61, which enables the first cushioning member 6 to provide the cushion for the second tube member 123 by cushioning an impact of the fastening member 5. When the second tube component 123 slides backward relative to the first tube component 121, the fastening member 5 can be biased to disengage from the first cushioning slot 61 into the accommodating hole 62. It should be noticed that the fastening member 5 can be disposed between the two ISOFIX mechanisms 12 and connect the two ISOFIX mechanisms 12 so that the two ISOFIX mechanisms 12 can move together and simultaneously.

According to a preferred embodiment, the width of the first cushioning slot 61 gradually decreases from the rear end of the first cushioning slot 61 to a front end of the first cushioning slot 61. Therefore, when the fastening member 5 moves forward from the rear end to the front end in the first cushioning slot 61, increasingly greater buffering effect can be applied on the fastening member 5 by the first cushioning member 6. To improve the deformation capacity of the first cushioning member 6 when squeezed by the fastening member 5, at least one deformation slot 63 that left to right transversely penetrates through the first cushioning member 6 is further formed on the first cushioning member 6. According to the preferred embodiment, there can be two deformation slots 63 that are respectively arranged on an upper and a lower side adjacent to the first cushioning slot 6. A width of the deformation slot 63 can gradually decrease from a rear end of the deformation slot 63 to a front end of the deformation slot 63, but not limited to this. According to other embodiments of the present application, the width of the deformation slot 61 can gradually increase from the rear end to the front end or remain equally spaced, a number of the deformation slots 63 can be more than two, and two or more first cushioning members 6 can be fixed to the first tube component 121 so that a plurality of fastening members 5 can be respectively accommodated in a plurality of accommodating holes 62 of the first cushioning members 6 or a single fastening member 5 can penetrates through the plurality of accommodating holes 62 simultaneously.

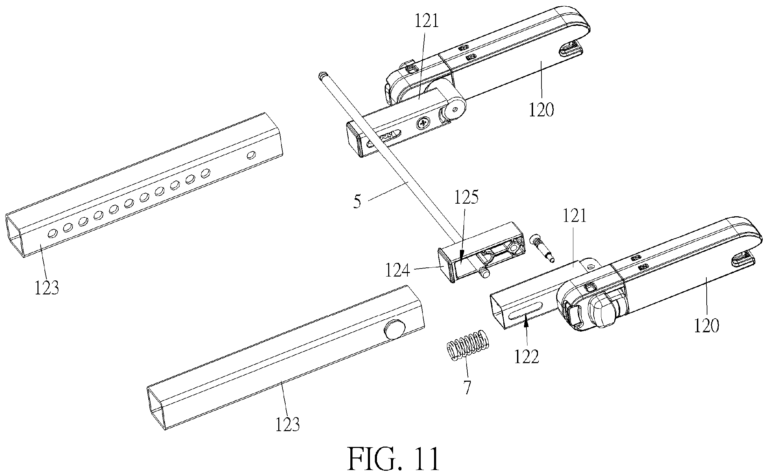

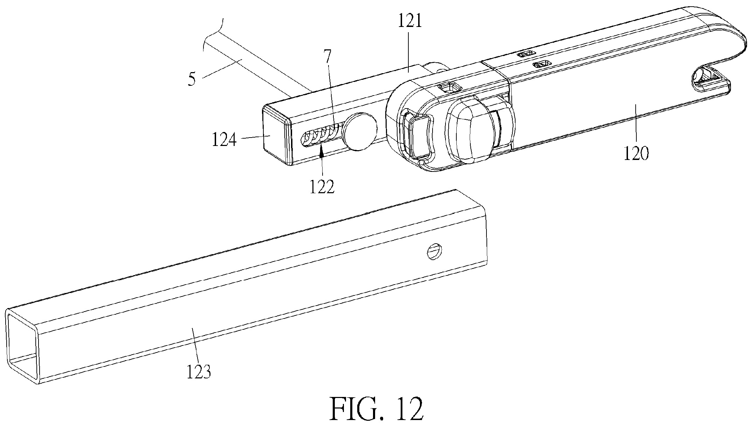

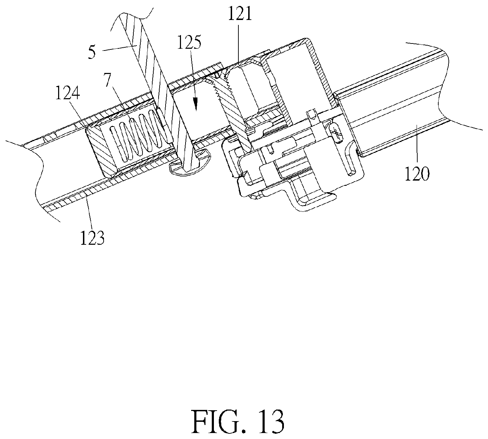

Please refer to FIG. 11 to FIG. 13. Fig. 11 is an exploded diagram of the ISOFIX mechanism 12 according to a fourth embodiment of the present application. FIG. 12 is diagram illustrating a first cushioning member 7 installed inside a first tube component 121 according to the fourth embodiment of the present application. FIG. 13 is an enlarged sectional diagram of the ISOFIX mechanism 12 according to the fourth embodiment of the present application. The difference between this fourth embodiment and the previous embodiments is that the first cushioning member 7 of the fourth embodiment is a compressible spring with a length equal to or larger than 1.5cm substantially, and, preferably, the compressible spring can have a length of 1.5cm and have a capacity to endure a compression force up to 5000N, that is, 500kg, but not limited to this. In addition, the fastening member 5 adopted by this fourth embodiment is the same connecting rod utilized in the previous third embodiment. According to the fourth embodiment, a restraining member 124 is, but not limited to, a plug body and is disposed and fixed to a front end of the first tube component 121 so as to enclose the front end of the first tube component 121. An accommodating chamber 125 is formed in and left to right transversely penetrates through the restraining member 124. The first cushioning member 7 is accommodated in the restraining member 124. The fastening member 5 penetrates through the second tube component 123 and into the elongated slot 122 on the first tube component 121 so as to slidably couple with the first tube component 121. Besides, the fastening member 5 penetrates through the accommodating chamber 125 of the restraining member 124 and is positioned on a rear side of the first cushioning member 7. When the second tube component 123 drives the fastening member 5 to slide forward, the fastening member 5 forward compresses the first cushioning member 7, and the first cushioning member 7 abuts against the restraining member 124 and the fastening member 5 provides the fastening member 5 with a backward resilient force to achieve the buffering effect.

Additionally, the cushioning structure adopted by the abovementioned first to fourth embodiments can further be disposed in the supporting leg 11 of the child safety seat so as to provide a cushion for the supporting leg 11.

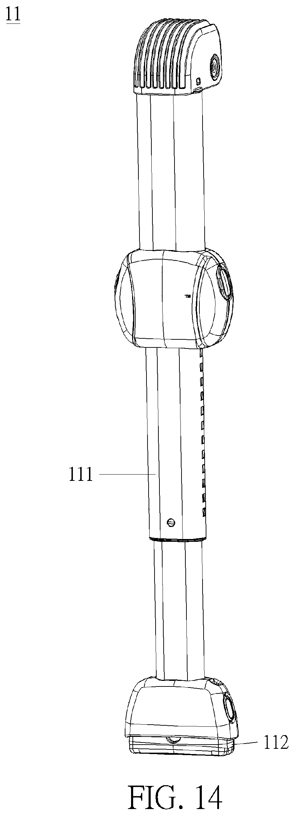

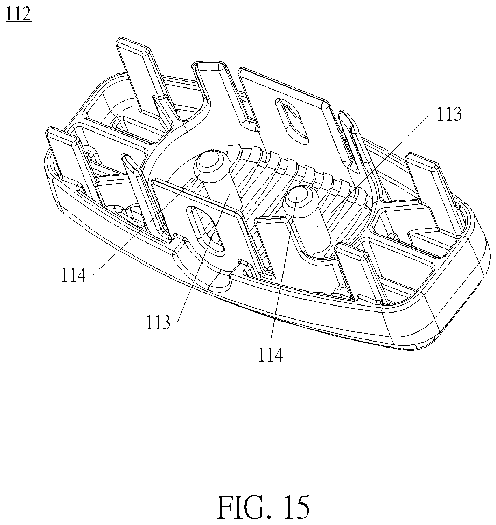

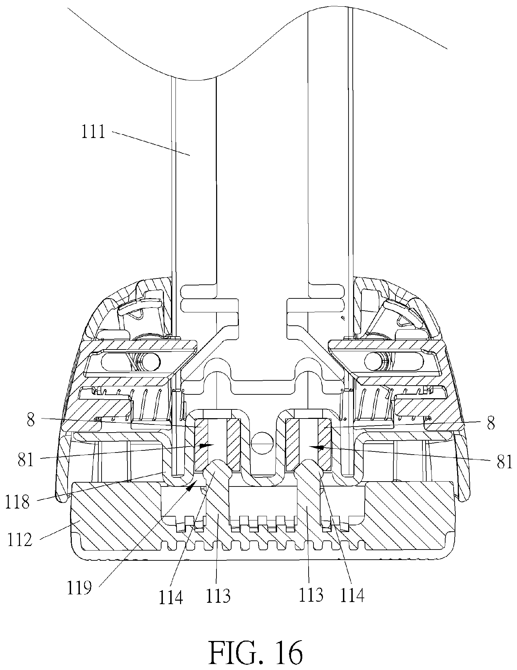

Please refer to FIG. 14 to FIG. 16. FIG. 14 is a diagram of the supporting leg 11 according to a fifth embodiment of the present application. FIG. 15 is a diagram of a foot member 112 according to the fifth embodiment of the present application. FIG. 16 is an enlarged sectional diagram of the foot member 112 according to the fifth embodiment of the present application. According to the fifth embodiment, the cushioning structure is disposed in the supporting leg 11. The supporting leg 11 includes a supporting rod 111 and the foot member 112 up and down slidably connected to a bottom portion of the supporting rod 111. The supporting rod 111 is the abovementioned first component, and the foot member 112 is the abovementioned second component. The cushioning structure includes first cushioning members 8 and fastening members. The fastening members are fixed inside the foot member 112, and the first cushioning members 8 are positioned and configured in the supporting rod 111. A bottom cover 118 is fixed to the bottom portion of the supporting rod 111, and restraining grooves 119 with openings facing downward are formed on a middle portion of the bottom cover 118, but not limited to this. According to another embodiment, the restraining grooves 119 can be formed on the foot member 112. The first cushioning members 8 can be in shapes of cylinders and are respectively accommodated and fixed in the restraining grooves 119 on the supporting rod 111 and above the fastening members. A first cushioning slot 81 top to bottom longitudinally penetrates through the first cushioning member 8. The fastening member includes a column body 113 and the cushioning head 114. A lower end of the column body 113 is fixed to the foot member 112, and the cushioning head 114 is fixed to an upper end of the column body 113. A diameter of the cushioning head 114 is larger than a diameter of the first cushioning slot 81. The first cushioning member 8 adopted by this fifth embodiment can be made of the same resilient high-density material according to the previous first embodiment, and the fastening member can be a rigid member. Besides, the fastening member can be, but is not limited to, a plastic member or a metal member integrated with the foot member 112, and the cushioning head 114 of the fifth embodiment can be in a shape of, but is not limited to, a mushroom, a ball or a tapered body. A downward sliding direction of the supporting rod 111 relative to the foot member 112 is defined as a positive sliding direction, and an upward sliding direction of the supporting rod 111 relative to the foot member 112 is defined as a reverse sliding direction. When the supporting rod 111 slides along the positive sliding direction, the cushioning heads 114 squeeze into the first cushioning slots 81 of the first cushioning members 8 so as to provide a cushion generating a buffering effect for the supporting rod 111. When the supporting rod 111 slides along the reverse sliding direction, the cushioning heads 114 can be biased to disengage from the first cushioning slots 81. According to the fifth embodiment, there are a pair of first cushioning members 8 and a pair of fastening members, but not limited to this. That is, a number of either the first cushioning member 8 or the fastening member could be one or more than two. For example, according to another embodiment, there can be several fastening members, and each of the several fastening members corresponds to a plurality of two or more first cushioning members 8 which are longitudinally arranged along a top to bottom direction, wherein a density of the upper first cushioning member 8 is larger than a density of the lower first cushioning member 8, and a diameter of the upper first cushioning slot 81 is smaller than a diameter of the lower first cushioning slot 81. Therefore, a better buffering effect can be achieved.

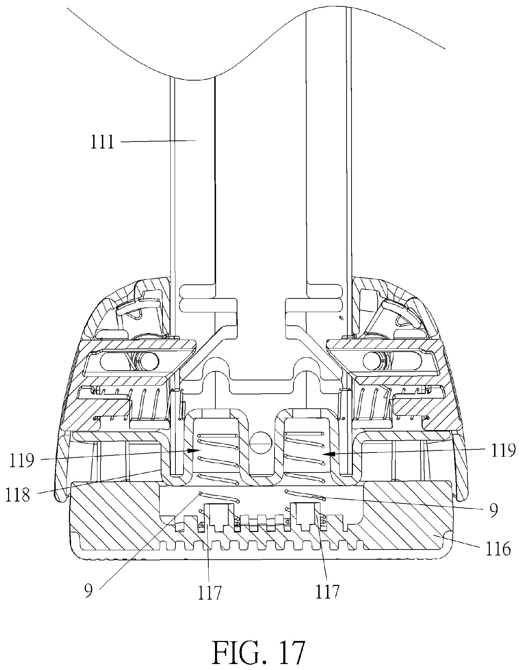

Please refer to FIG. 17. FIG. 17 is an enlarged sectional diagram of a foot member 116 according to a sixth embodiment of the present application. According to the sixth embodiment, the first cushioning member 9 disposed in the supporting leg 11 is a compressible spring. Besides the first cushioning member 9, the sixth embodiment has the same configuration according to the previous fifth embodiment in that the bottom cover 118 is fixed to the bottom portion of the supporting rod 111, and the restraining grooves 119 with openings facing downward are formed on a middle portion of the bottom cover 118. The difference between the sixth embodiment and the fifth embodiment is that guide posts 117 are protruded from the foot member 116. Therefore, an upper end of the first cushioning member 9 is positioned and accommodated in the restraining groove 119, and a lower end of the first cushioning member 9 is positioned on the foot member 116 by sheathing the guide post 117. Resilience provided by the first cushioning members can cushion sliding movement of the supporting rod 111 relative to the foot member 116 so as to achieve a buffering effect. According to other embodiments, there can be fastening members disposed on the foot member 116, and the number of the first cushioning members can be two or more than two.

The same cushioning structure mentioned above according to the sixth and fifth embodiments can be disposed in the ISOFIX mechanism 12 by adopting the same configuration design.

In contrast to the conventional child safety seat, the child safety seat of the present application provides the cushioning structure disposed in the ISOFIX mechanism or the supporting leg. During a crash accident, the first cushioning member and the second cushioning member of the cushioning structure disposed between the first tube component and the second tube component or between the supporting rod and the foot member can provide a cushion to prevent a large instant acceleration of the seat body, which reduces any possibility of harm to the child in the seat due to the crash accident.

Those skilled in the art will readily observe that numerous modifications and alterations of the device and method may be made while retaining the teachings of the invention.

The present invention can also be defined by the following aspects:
1. A cushioning structure, disposed to a child safety seat, the child safety seat comprising a first component and a second component configured to slide relative to each other, characterized by the cushioning structure comprising a first cushioning member positioned at the first component, the first cushioning member being resilient, and wherein when the second component slides relative to the first component, the first cushioning member provides a cushion for the second component.
2. The cushioning structure of aspect 1, characterized in that the first cushioning member is fixed to the first component, a first cushioning slot is formed on the first cushioning member, and the cushioning structure further comprises:
   a fastening member fixed to the second component;
   wherein when the second component slides relative to the first component, the fastening member is squeezed into the first cushioning slot.
3. The cushioning structure of aspect 2, characterized in that the fastening member comprises a cushioning head disposed at a free end of the fastening member, and a diameter of the cushioning head is larger than a diameter of the first cushioning slot.
4. The cushioning structure of aspect 3, characterized in that the fastening member further comprises a column body with a length longer than a length of the first cushioning member, and the cushioning head is disposed at an end of the column body.
5. The cushioning structure of aspect 4, further characterized by:
   at least one second cushioning member disposed at the first component, the at least one second cushioning member and the first cushioning member being arranged longitudinally along the first component, a second cushioning slot being formed on the at least one second cushioning member and communicated with the first cushioning slot.
6. The cushioning structure of aspect 5, characterized in that the at least one second cushioning member is made of material with a density greater than a density of the first cushioning member, and when there are at least two of the second cushioning members, a density of one of the at least two of second cushioning members farther away from the first cushioning member is larger than a density of another of the at least two of second cushioning members closer to the first cushioning member.
7. The cushioning structure of any one of aspects 5 to 6, characterized in that a diameter of the second cushioning slot is smaller than a diameter of the first cushioning slot, and when there are at least two of the second cushioning members, the diameter of the second cushioning slot on one of the at least two of second cushioning members farther away from the first cushioning member is smaller than the diameter of another of the at least two of second cushioning slots on the second cushioning member closer to the first cushioning member.
8. The cushioning structure of any one of aspects 3 to 7, characterized in that the child safety seat further comprises a seat body and at least one an ISOFIX mechanism connected with a rear end of the seat body and comprising an ISOFIX plug, the first component and the second component, the first component is a first tube component, the second component is a second tube component, the first component and the second component are sheathed with each other, the first component is fixed to the ISOFIX plug, the second component is fixed to the seat body, the first component is sheathed in the second component, the first cushioning member is fixed to a front end of the first component and positioned inside the first component, and the child safety seat further comprises:
   a connecting rod fixed to and penetrating through the second component and slidably coupled with the first component, the connecting rod being positioned on a rear side of the first cushioning member, and the fastening member being fixed to the connecting rod.
9. The cushioning structure of aspect 8, characterized in that the fastening member further comprises a restraining portion, the cushioning head is disposed at an end of the fastening member, the restraining portion is integrated with another end of the fastening member, and the restraining portion is positioned inside the first component and fixed to the connecting rod.
10. The cushioning structure of aspect 2, characterized in that an accommodating hole is further formed on the first cushioning member and connected to a rear end of the first cushioning slot, the fastening member is positioned in the accommodating hole, a diameter of the fastening member is larger than a width of the first cushioning slot, and the fastening member is squeezed from the accommodating hole into the first cushioning slot when the second component slides relative to the first component.
11. The cushioning structure of aspect 10, characterized in that the width of the first cushioning slot gradually decreases from the rear end of the first cushioning slot to a front end of the first cushioning slot.
12. The cushioning structure of aspect 1, characterized in that the first cushioning member is a compressible spring compressed by sliding movement of the second component relative to the first component.
13. The cushioning structure of aspect 12, characterized in that the child safety seat further comprises a seat body and at least one ISOFIX mechanism connected with a rear end of the seat body and comprising an ISOFIX plug, a first component and a second component, the first component is a first tube component, the second component is a second tube component, the first component and the second component are sheathed with each other, the first component is fixed to the ISOFIX plug, the second component is fixed to the seat body, the first component is sheathed in the second component, a restraining member is fixed to a front end of the first component, a connecting rod is fixed to and penetrates through the second component and slidably coupled with the first component, and the compressible spring resiliently abuts against the restraining member and the connecting rod.
14. The cushioning structure of any one of aspects 2 to 11, characterized in that at least two first cushioning slots are side by side formed on the first cushioning member, and at least two fastening members corresponding to the at least two first cushioning slots are disposed in the second component.
15. The cushioning structure of any one of aspects 2 to 14, characterized in that the child safety seat further comprises a supporting leg, and the supporting leg comprises the first component and the second component, the first component is a supporting rod, the second component is a foot member, the foot member is up and down slidably connected to a bottom portion of the supporting rod, the first cushioning member is positioned above the fastening member, a lower end of the fastening member is fixed to the foot member, and a cushioning head is disposed at an upper end of the fastening member.
16. The cushioning structure of any one of aspects 12 to 14, characterized in that the child safety seat further comprises a supporting leg, and the supporting leg comprises the first component and the second component, the first component is a supporting rod, the second component is a foot member, the foot member is up and down slidably connected to a bottom portion of the supporting rod, the compressible spring resiliently abuts between the supporting rod and the foot member, a restraining groove accommodating the compressible spring is formed at one of the supporting rod and the foot member, and a guiding post sheathed by the compressible spring is disposed on the other of the supporting rod and the foot member.
17. The cushioning structure of any one of aspects 8, 9, and 13, characterized in that two ISOFIX mechanisms are disposed on two rear sides of the seat body, and the connecting rod is connected between the second components of the two ISOFIX mechanisms.
18. A child safety seat, comprising:
   the cushioning structure of any one of aspects 1 to 17.

## Claims

1. A child safety seat comprising:
a first component and a second component configured to slide relative to each other, and
a cushioning structure, includes a first cushioning member (6) positioned at the first component, wherein the first cushioning member (6) is resilient, and when the second component slides relative to the first component, the first cushioning member (6) provides a cushion for the second component;
wherein the first cushioning member (6) is fixed to the first component, and a first cushioning slot (61) is formed on the first cushioning member (6); and
wherein the cushioning structure further includes a fastening member (5) fixed to the second component, an accommodating hole (62) is further formed on the first cushioning member (6) and connected to a rear end of the first cushioning slot (61), the fastening member (5) is positioned in the accommodating hole (62), a diameter of the fastening member (5) is larger than a width of the first cushioning slot (61), and the fastening member (5) is squeezed from the accommodating hole (62) into the first cushioning slot (61) when the second component slides relative to the first component.

2. The child safety seat of claim 1, **characterized in that** the width of the first cushioning slot (61) gradually decreases from the rear end of the first cushioning slot (61) to a front end of the first cushioning slot (61).

3. The child safety seat of claim 1 or 2, **characterized in that** at least one deformation slot (63) is further formed on the first cushioning member (6) and adjacent to the first cushioning slot (61).

4. The child safety seat of claim 3, **characterized in that** a width of the deformation slot (63) gradually decreases from a rear end of the deformation slot (63) to a front end of the deformation slot (63).

5. The child safety seat of claim 3, **characterized in that** a width of the deformation slot (63) gradually increases or remains equally spaced from a rear end of the deformation slot (63) to a front end of the deformation slot (63).

6. The child safety seat of any one of claims 1 to 5, **characterized in that** at least two deformation slots (63) are formed on the first cushioning member (6) and disposed on two sides of the first cushioning slot (61).

7. The child safety seat of any one of claims 1 to 6, **characterized in that** the child safety seat further comprises a seat body (10) and at least one ISOFIX mechanism (12) connected with a rear end of the seat body (10) and including an ISOFIX plug (120), the first component and the second component are sheathed with each other, the first component is a first tube component (121), the second component is a second tube component (123), the first component is fixed to the ISOFIX plug (120), and the second component is fixed to the seat body (10).

8. The child safety seat of claim 7, **characterized in that** when the second tube component (123) slides forward relative to the first tube component (121), the fastening member (5) moves from the accommodating hole (62) to squeeze into the first cushioning slot (61), and when the second tube component (123) slides backward relative to the first tube component (121), the fastening member (5) is biased to disengage from the first cushioning slot (61) into the accommodating hole (62).

9. The child safety seat of 8, **characterized in that** the first component is sheathed in the second component, the first cushioning member (6) is fixed to a front end of the first component and positioned inside the first component.

10. The child safety seat of any one of claims 7 to 9, **characterized in that** the fastening member (5) is a connecting rod penetrating into the first component, and the connecting rod is slidably coupled with the first component.

11. The child safety seat of claim 10, wherein the fastening member (5) penetrates through an elongated slot (122) configured on the first tube component (121), enabling the fastening member (5) and the second tube component (123) to slide together and simultaneously relative to the first tube component (121).

12. The child safety seat of any one of claims 6 to 11, **characterized in that** two or more first cushioning members (6) are fixed to the first tube component (121) so that a plurality of fastening members (5) are respectively accommodated in a plurality of accommodating holes (62) of the first cushioning members (6) or a single fastening member (5) penetrates through the plurality of accommodating holes (62) simultaneously.
